(19) Europäisches Patentamt / European Patent Office / Office européen des brevets

(11) **EP 4 564 461 A2**

(12) **EUROPEAN PATENT APPLICATION**

(43) Date of publication:
04.06.2025 Bulletin 2025/23

(21) Application number: 24216685.8

(22) Date of filing: 29.11.2024

(51) International Patent Classification (IPC):
*H01M 4/136* (2010.01)  *H01M 4/36* (2006.01)
*H01M 4/38* (2006.01)  *H01M 4/587* (2010.01)

(52) Cooperative Patent Classification (CPC):
**H01M 4/136; H01M 4/362; H01M 4/386;**
**H01M 4/587;** H01M 2004/027

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: 30.11.2023 KR 20230171125

(71) Applicants:
• SK On Co., Ltd.
Seoul 03161 (KR)
• SK innovation Co., Ltd.
Seoul 03188 (KR)

(72) Inventors:
• MOON, Joon Hyung
34124 Daejeon (KR)
• KIM, Eun Hyo
34124 Daejeon (KR)
• PARK, Gwi Ok
34124 Daejeon (KR)
• PARK, Eun Jun
34124 Daejeon (KR)
• YU, Do Ae
34124 Daejeon (KR)
• YOO, Seok Keun
34124 Daejeon (KR)

(74) Representative: Stolmár & Partner
Patentanwälte PartG mbB
Blumenstraße 17
80331 München (DE)

(54) **ANODE ACTIVE MATERIAL FOR LITHIUM SECONDARY BATTERY AND LITHIUM SECONDARY BATTERY INCLUDING THE SAME**

(57) An anode active material for a lithium secondary battery includes a composite particle. The composite particle includes a carbon-based particle including pores, and a silicon-containing coating formed on a surface of the carbon-based particle. A crystallite size of silicon included in the silicon-containing coating after a heat treatment of the composite particle at a temperature of 900 °C to 1200 °C for 6 hours to 9 hours measured by an X-ray diffraction (XRD) analysis is 10 nm or less.

FIG. 1

EP 4 564 461 A2

**Description**

TECHNICAL FIELD

The disclosure of this patent application relates to an anode active material for a lithium secondary battery and a lithium secondary battery including the same.

BACKGROUND

A secondary battery which can be charged and discharged repeatedly has been widely employed as a power source of a mobile electronic device such as a camcorder, a mobile phone, a laptop computer, etc., according to developments of information and display technologies. Recently, a battery pack including the secondary battery is being developed and applied as a power source of an eco-friendly vehicle such as an electric automobile.

Examples of the secondary battery include a lithium secondary battery, a nickelcadmium battery, a nickel-hydrogen battery, etc. The lithium secondary battery among the secondary batteries is being actively developed due to high operational voltage and energy density per unit weight, a high charging rate, a compact dimension, etc.

Recently, as an application range of the lithium secondary battery is expanded, the lithium secondary battery having higher capacity and power is being developed. For example, silicon having high capacity can be combined with carbon to be used as an anode active material.

However, a silicon-carbon composite anode active material has an increased volume expansion difference to result in cracks and an exposure to an electrolyte solution of the anode active material.

SUMMARY

According to an aspect of the present disclosure, there is provided an anode active material for a lithium secondary battery having improved life-span properties.

According to an aspect of the present disclosure, there is provided a lithium secondary battery having improved life-span properties.

An anode active material for a lithium secondary battery includes a composite particle. The composite particle includes a carbon-based particle including pores, and a silicon-containing coating formed on a surface of the carbon-based particle. A crystallite size of silicon included in the silicon-containing coating after a heat treatment of the composite particle at a temperature of 900 °C to 1200 °C for 6 hours to 9 hours measured by an X-ray diffraction (XRD) analysis is 10 nm or less.

In some embodiments, the crystallite size of silicon included in the silicon-containing coating may be calculated by Formula 1.

[Formula 1]

$$L = \frac{0.9\lambda}{\beta cos\theta}$$

In Formula 1, L represents the crystallite size (nm), $\lambda$ represents an X-ray wavelength (nm), $\beta$ represents a full width at half maximum (FWHM) (rad) of a peak of a (111) plane included in the silicon-containing coating, and $\theta$ represents a diffraction angle (rad).

In some embodiments, the heat treatment may be performed using 1 g to 5 g of the composite particle in an inactive atmosphere.

In some embodiments, the crystallite size of silicon included in the silicon-containing coating measured by the XRD analysis after the heat treatment may be 8 nm or less.

In some embodiments, silicon included in the silicon-containing coating after the heat treatment includes an amorphous structure.

In some embodiments, a pore size of the carbon-based particle may be in a range from 0.1 nm to 10 nm.

In some embodiments, a pore size of the carbon-based particle may be in a range from 1 nm to 5 nm.

In some embodiments, the composite particle after the heat treatment may further include silicon carbide (SiC).

In some embodiments, the composite particle after the heat treatment may satisfy Formula 2.

[Formula 2]

$$I(Si(220))/I(SiC) < 1.0$$

In Formula 2, I(Si(220)) is a maximum peak intensity in a 2θ range of 46° to 48° measured by the XRD analysis, I(SiC) is a maximum peak intensity in a 2θ range of 34° to 36° measured by the XRD analysis, and 2θ is a diffraction angle (°).

In some embodiments, the composite particle may further include a carbon coating formed on the silicon-containing coating.

In some embodiments, the pores of the carbon-based particle have a shape indented from an outermost portion of the carbon-based particle into an inside of the carbon-based particle.

A lithium secondary battery includes an anode including the above-described anode active material for a lithium secondary battery, and a cathode facing the anode.

In a method of preparing an anode active material for a lithium secondary battery, a carbon-based particle including pores is prepared. The carbon-based particle and a silicon-containing gas are co-fired to form a composite particle including a silicon-containing coating formed on a surface of the carbon-based particle. A crystallite size of silicon included in the silicon-containing coating after a heat treatment of the composite particle at a temperature of 900°C to 1200 °C for 6 hours to 9 hours measured by an X-ray diffraction (XRD) analysis is 10 nm or less.

In some embodiments, the silicon-containing gas may include a silane gas, and a volume of the silane gas based on a total volume of the silicon-containing gas may be in a range from 10 vol% to 70 vol%.

In some embodiments, the volume of the silane gas based on the total volume of the silicon-containing gas is in a range from 20 vol% to 50 vol%.

According to an embodiment of the present disclosure, a gas generation due to side reactions between an anode active material and an electrolyte solution may be suppressed.

According to an embodiment of the present disclosure, life-span properties of a secondary battery may be improved.

According to an embodiment of the present disclosure, life-span properties of a secondary battery may be improved under a high temperature environment or during repeated charging and discharging.

The anode active material and the lithium secondary battery according to the present disclosure may be widely applied in green technology fields such as an electric vehicle, a battery charging station, a solar power generation, a wind power generation, etc., using a battery, etc. The anode active material and the lithium secondary battery according to the present disclosure may be used for eco-friendly electric vehicles and hybrid vehicles to prevent a climate change by suppressing air pollution and greenhouse gas emissions. etc.

BRIEF DESCRIPTION OF THE DRAWINGS

FIG. 1 is a schematic cross-sectional view illustrating a composite particle in accordance with example embodiments.

FIG. 2 and FIG. 3 are a schematic plan view and a schematic cross-sectional view, respectively, illustrating a lithium secondary battery in accordance with example embodiments.

FIG. 4 is an X-ray diffraction (XRD) graph of Example 1, Comparative Example 1 and Comparative Example 3.

DETAILED DESCRIPTION OF THE EMBODIMENTS

According to embodiments disclosed in the present application, an anode active material for a lithium secondary battery (hereinafter, that may be abbreviated as an anode active material) including a composite particle. According to embodiments of the present disclosure, a lithium secondary battery (hereinafter, that may be abbreviated as a secondary battery) including the anode active material is also provided.

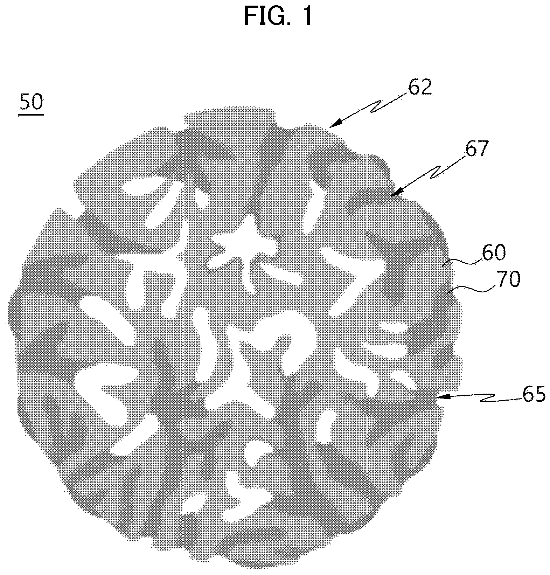

FIG. 1 is a schematic cross-sectional view illustrating a composite particle in accordance with example embodiments.

FIG. 1 illustrates a schematic shape of the composite particles for convenience of descriptions, but the structure/shape of the composite particle of the present disclosure is not limited to that illustrated in FIG. 1. For example, a cross-section of a carbon-based particle may be randomly changed from a circular shape. Additionally, a silicon-containing coating may be partially formed on pores and a surface of the carbon-based particle, or may be formed as a plurality of discontinuous islands or patterns.

Referring to FIG. 1, as described above, a composite particle 50 includes a carbon-based particle 60 and a silicon (Si)-containing coating 70.

According to embodiments of the present disclosure, the carbon-based particle 60 includes a pore 65. For example, the carbon-based particle 60 are porous particles including a plurality of pores.

In some embodiments, the carbon-based particle 60 may include an activated carbon, a carbon nanotube, a carbon nanowire, graphene, a carbon fiber, carbon black, graphite, a porous carbon, a pyrolyzed cryogel, a pyrolyzed xerogel, a pyrolyzed aerogel, etc. These may be used alone or in a combination of two or more therefrom.

In some embodiments, the carbon-based particle 60 may include an amorphous structure or a crystalline structure.

In an embodiment, the carbon-based particle 60 may include the amorphous structure. In this case, durability of the anode active material may be increased, so that cracks may be suppressed during charging and discharging or an external impact. Accordingly, the life-span properties of the secondary battery may be improved.

The silicon-containing coating 70 may be formed on a surface of the carbon-based particle 60 including the pores 65. For example, volume expansion of silicon contained in the silicon-containing coating 70 may be alleviated by the pores 65. Accordingly, cracks due to a difference between volume expansion ratios of carbon (e.g., about 150 volume% or less) and silicon (e.g., about 400 volume% or more) during charging and discharging of the battery may be prevented while employing the relatively high capacity properties of silicon. Accordingly, gas generation due to a side reaction between the anode active material and an electrolyte solution may be prevented, and the life-span properties of the secondary battery may be improved.

The pores 65 of the carbon-based particle 60 may have a shape indented into the carbon-based particle 60 from an outermost portion of the carbon-based particle 60 to an inside of the carbon-based particle 60. For example, the pores 65 may include open pores to an outside of the carbon-based particles 60.

As used herein, the term "a surface of the carbon-based particle" and/or "a surface of the carbon-based particle 60" may refer to an outer surface 62 of the carbon-based particle 60, an inner surface 67 of the pore 65, or the outer surface 62 of the carbon-based particle 60 and the inner surface 67 of the pore 65.

For example, the silicon-containing coating 70 may be formed on at least a portion of the outer surface 62 of the carbon-based particle 60.

For example, the silicon-containing coating 70 may be formed on at least a portion of the inner surface 67 of the pore 65 of the carbon-based particles 60.

For example, the silicon-containing coating 70 may be formed on at least a portion of the outer surface 62 of carbon-based particle 60 and at least a portion of the inner surface 67 of pore 65.

According to embodiments of the present disclosure, a crystallite size of silicon included in the silicon-containing coating 70 after a heat treatment of the composite particle 60 at a temperature of 900° C to 1200° C for 6 hours to 9 hours measured by an X-ray diffraction (XRD) analysis is 10 nm or less, in some embodiments, may be 9 nm or less, or 8 nm or less.

In some embodiments, the heat treatment may be performed for 1 g to 5 g of the composite particles 50 in an inactive atmosphere. Accordingly, reliability and reproducibility of the measurement results may be improved by uniformly maintaining conditions of the heat treatment.

For example, the term "inactive atmosphere" used herein may refer to a state in which an inert gas (e.g., nitrogen ($N_2$) gas or argon (Ar) gas) is continuously purged into a chamber containing the composite particles 50.

For example, even in a silicon particle having a relatively small crystallite size or an amorphous structure, silicon internal domains may be agglomerated or crystallized according to repeated charging and discharging of the secondary battery or at a high temperature caused by an external heat.

In the crystallite size range of the present disclosure, the crystallite size of silicon after the heat treatment may be controlled to improve life-span properties under a high temperature environment or during repeated charging and discharging. For example, the crystallite size of silicon after the heat treatment may be proportional to an inner domain size of silicon.

Hereinafter, the term "heat treatment" used herein may refer to a heat treatment performed under the above conditions (at 900°C to 1200°C for 6 hours to 9 hours).

In some embodiments, the crystallite size of silicon included in the silicon-containing coating 70 may be measured using a Scherrer equation represented by Formula 1 below of XRD analysis methods.

[Formula 1]

$$L = \frac{0.9\lambda}{\beta cos\theta}$$

In Formula 1 above, L represents the crystallite size (nm), λ represents an X-ray wavelength (nm), β represents a full width at half maximum (FWHM) (rad) of a corresponding peak, and θ represents a diffraction angle (rad). In example embodiments, the FWHM in the XRD analysis for measuring the crystallite size may be measured from a peak of (111) plane included in the silicon-containing coating 70.

In some embodiments, in Formula 1 above, β may represent a FWHM obtained by correcting a value derived from an equipment. In an embodiment, Si may be used as a standard material for reflecting the equipment-derived value. In this case, the equipment-derived FWHM may be expressed as a function of 2θ by fitting a FWHM profile in an entire 2θ range of Si. Thereafter, a value obtained by subtracting and correcting the equipment-derived FWHM value at the corresponding 2θ from the function may be used as β.

The heat treatment may not be included in a preparation or a manufacturing process of the composite particles 50, and may be performed on a product of the composite particles 50. Accordingly, accuracy of evaluating high-temperature life-span properties and cycle properties of the anode active material may be enhanced.

For example, the heat-treated composite particles 50 may be naturally cooled to room temperature and the XRD analysis may be performed.

In some embodiments, silicon included in the silicon-containing coating 70 after the heat treatment may include an amorphous structure. Accordingly, the life-span properties under a high temperature environment or during repeated charging and discharging may be improved.

As used herein, the term "amorphous structure" may refer to a case in which the shape of a single silicon included in the silicon-containing coating 70 is amorphous or a case in which a size of a single silicon is excessively small and the measurement through the Scherrer equation represented by Formula 1 may not be substantially practical.

In example embodiments, the crystallite size of silicon after the heat treatment may be controlled according to the size of the pores 65 of the carbon-based particle 60, a content of the silicon source in a deposition gas (e.g., a silicon-containing gas) used in the manufacturing process, a firing temperature, a firing time, etc.

In some embodiments, a size of the pore 65 of the carbon-based particle 60 may be in a range from 0.1 nm to 10 nm, from 0.5 nm to 8 nm, or from 1 nm to 5 nm. In the above range, excessive deposition of silicon may be prevented, and cracks of the anode active material during charging and discharging of the secondary battery may be further suppressed.

The size of the pore 65 may refer to a diameter of an entrance of the pore 65 formed on the surface of the carbon-based particle 60.

In some embodiments, the silicon-containing coating 70 may include silicon, and optionally may further include $SiO_x$ (0<x<2).

In some embodiments, the composite particle 50 after the heat treatment may further include silicon carbide (SiC). For example, an SiC phase may be grown on the composite particle 50 and/or the silicon-containing coating 70 according to the heat treatment. Accordingly, durability and stability of the anode active material may be enhanced under the high temperature environment or during repeated charging and discharging.

For example, when the heat treatment is performed in the formation phase of the composite particle 50, is not performed for the product of the composite particle 50, SiC may not be sufficiently formed.

In some embodiments, the composite particle 50 after the heat treatment may satisfy Formula 2 below.

[Formula 2]

$$I(Si(220))/I(SiC) < 1.0$$

In Formula 2, I(Si(220)) is a maximum peak intensity in a 2θ range of 46° to 48° measured by an XRD analysis, I(SiC) is a maximum peak intensity in a 2θ range of 34° to 36° measured by the XRD analysis, and 2θ represents a diffraction angle (°).

For example, I(Si(220) may indicate a peak intensity of a (220) plane of silicon included in the silicon-containing coating 70. I(SiC) may indicate a peak intensity of SiC formed on the composite particle 50 and/or the silicon-containing coating 70 according to the heat treatment.

The term "peak intensity" used herein may refer to a peak height in an XRD analysis graph having a horizontal axis of 2θ and a vertical axis of a peak intensity.

When Formula 2 is satisfied, a SiC phase may be formed in the composite particle 50 at an appropriate ratio, and thus driving stability of the anode active material may be further improved.

In some embodiments, the composite particle 50 may further include a carbon coating (not illustrated) formed on the silicon-containing coating 70. Accordingly, a contact between silicon and water in the anode active material may be prevented. Accordingly, a decrease in a discharge capacity and a capacity efficiency of the secondary battery may be prevented in a period from preparation of the anode active material and before formation of the anode.

In some embodiments, the carbon coating may be formed on a portion of the surface of the carbon-based particle 60 where the silicon-containing coating 70 is not formed. For example, the carbon coating may entirely cover the carbon-based particle 60 and the silicon-containing coating 70. Accordingly, mechanical and chemical stability of the anode active material may be improved.

In an embodiment, the carbon coating may include at least one of carbon and a conductive polymer. For example, the carbon may include an amorphous carbon. For example, the conductive polymer may include polyacetylene, polyaniline, polypyrrole, polythiophene, etc.

Hereinafter, a method of preparing the above-described anode active material for a lithium secondary battery according to example embodiments is provided.

In example embodiments, the carbon particle 60 including the pores 65 may be prepared.

In some embodiments, preliminary carbon particles and an additive may be mixed, and then a first firing and washing may be performed to form the carbon particles 60.

In an embodiment, the preliminary carbon particles may include at least one selected from the group consisting of glucose, sucrose, cellulose, a petroleum pitch, a coal pitch, a biomass and a resol oligomer.

In some embodiments, the additive may serve as a chemical etchant or a hard template.

In one embodiment, the chemical etchant may include a basic and/or acidic agent such as potassium hydroxide (KOH), potassium acetate, potassium carbonate ($K_2CO_3$), sodium hydroxide (NaOH), sodium carbonate ($Na_2CO_3$), ammonia water ($NH_4OH$), sulfuric acid ($H_2SO_4$). These may be used alone or in a combination of two or more therefrom. For example, a reaction of the above-described preliminary carbon particles and the additive may be performed through a chemical activation method.

In an embodiment, the hard template may include silica, polystyrene, etc. These can be used alone or in a combination of two or more therefrom. The hard template may serve as, e.g., an additive for forming pores. For example, the size of the pores 65 may be controlled according to a particle size of the hard template.

In an embodiment, the first firing may be performed at a temperature in a range from 600 °C to 900 °C. In this range, the size and/or volume of the pores 65 may be appropriately controlled.

In an embodiment, the washing may be performed by adding an acidic solution or an alkaline solution to the mixture. For example, the acidic solution may include a hydrochloric acid (HCl) solution, a sulfuric acid ($H_2SO_4$) solution, etc. For example, the alkaline solution may include a NaOH solution, etc.

In example embodiments, the carbon-based particle 60 and a silicon-containing gas may be co-fired (e.g., a second firing) to form the composite particles 50 including the silicon-containing coating 70 formed on the surface of the carbon-based particles 60. For example, the silicon-containing gas may include a silane gas and an inert gas. For example, the inert gas may include argon (Ar) gas.

In some embodiments, a volume of the silane gas based on a total volume of the silicon-containing gas may be in a range from 10 vol% (volume%) to 70 vol%, from 20 vol% to 70 vol%, from 20 vol% to 50 vol%, or from 30 vol% to 50 vol%. In the above range, a domain size of silicon included in the silicon-containing coating 70 before the heat treatment may be reduced. Accordingly, a crystallite size of silicon after the heat treatment may be reduced.

In some examples, the second firing may be performed at a temperature in a range from 400°C to 600°C. In the above range, the crystallite size of silicon included in the silicon-containing coating 70 before the heat treatment may be reduced. Accordingly, mechanical stability of the anode active material may be improved during a pressing process or repeated charging and discharging of the secondary battery.

In the composite particle 50 formed by the above-described method, the crystallite size of silicon included in the silicon-containing coating 70 after the heat treatment measured through the XRD analysis may be 10 nm or less.

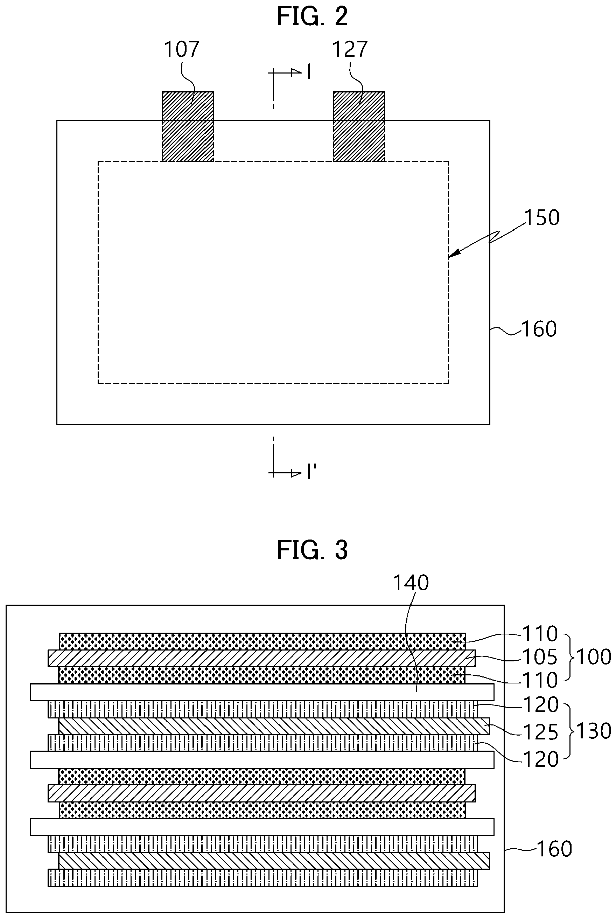

FIGS. 2 and 3 are a schematic plan view and a schematic cross-sectional view, respectively, illustrating a lithium secondary battery in accordance with example embodiments. For example, FIG. 3 is a cross-sectional view taken along a line I-I' of FIG. 2 in a thickness direction.

The lithium secondary battery may include an anode 130 including the above-described anode active material and the cathode 100 facing the anode 130.

The cathode 100 may include a cathode current collector 105 and a cathode active material layer 110 formed on at least one surface of the cathode current collector 105.

The cathode current collector 105 may include stainless steel, nickel, aluminum, titanium, or an alloy thereof. The cathode current collector 105 may include aluminum or stainless steel surface-treated with carbon, nickel, titanium, silver, etc. For example, a thickness of the cathode current collector 105 may be 10 μm to 50 μm.

The cathode active material layer 110 may include a cathode active material. The cathode active material may include a compound capable of reversibly intercalating and deintercalating lithium ions.

In example embodiments, the cathode active material may include a lithium-nickel metal oxide. The lithium-nickel metal oxide may further include at least one of cobalt (Co), manganese (Mn) and aluminum (Al).

In some embodiments, the cathode active material or the lithium-nickel metal oxide may include a layered structure or a crystal structure represented by Chemical Formula 1.

[Chemical Formula 1]     $Li_xNi_aM_bO_{2+z}$

In Chemical Formula 1, $0.9<x<1.2$, $0.5\leq a\leq0.99$, $0.01\leq b\leq0.5$, and $-0.5\leq z\leq0.1$. As described above, M may include Co, Mn and/or Al.

The chemical structure represented by Chemical Formula 1 represents a bonding relationship included in the layered structure or the crystal structure of the cathode active material, and does not exclude other additional elements. For example, M includes Co and/or Mn, and Co and/or Mn may serve as a main active element of the cathode active material together with Ni. Chemical Formula 1 is provided to express the bonding relationship of the main active element and is to be understood as a formula encompassing introduction and substitution of the additional elements.

In an embodiment, an auxiliary element for enhancing chemical stability of the cathode active material or the layered structure/crystal structure in addition to the main active element may be further included. The auxiliary element may be incorporated into the layered structure/crystal structure to form a bond, and this case is to be understood as being included within the range of the chemical structure represented by Chemical Formula 1.

The auxiliary element may include at least one of, e.g., Na, Mg, Ca, Y, Ti, Hf, V, Nb, Ta, Cr, Mo, W, Fe, Cu, Ag, Zn, B, Al, Ga, C, Si, Sn, Sr, Ba, Ra, P and Zr. The auxiliary element may act as an auxiliary active element such as Al that contributes to capacity/power activity of the cathode active material together with Co or Mn.

For example, the cathode active material or the lithium-nickel metal oxide particle may include a layered structure or a crystal structure represented by Chemical Formula 1-1.

$$[\text{Chemical Formula 1-1}] \qquad Li_xNi_aM1_{b1}M2_{b2}O_{2+z}$$

In Chemical Formula 1-1, M1 may include Co, Mn and/or Al. M2 may include the above-described auxiliary element. In Chemical Formula 1-1, $0.9\leq x\leq1.2$, $0.5\leq a\leq0.99$, $0.01\leq b1+b2\leq0.5$, and $-0.5\leq z\leq0.1$.

The cathode active material may further include a coating element or a doping element. For example, elements substantially the same as or similar to the above-described auxiliary elements may be used as the coating element or the doping element. For example, the above-described elements may be used alone or in a combination of two or more therefrom as the coating element or the doping element.

The doping element of the coating element may be present on a surface of the lithium-nickel metal oxide particle, or may penetrate through the surface of the lithium-nickel metal oxide particle to be included in the bonding structure represented by Chemical Formula 1 or Chemical Formula 1-1.

The cathode active material may include a nickel-cobalt-manganese (NCM)-based lithium oxide. In this case, an NCM-based lithium oxide having an increased nickel content may be used.

Ni may be provided as a transition metal related to the power and capacity of the lithium secondary battery. Thus, as described above, a high-capacity cathode and a high-capacity lithium secondary battery may be implemented using a high-Ni composition in the cathode active material.

However, as the content of Ni increases, long-term storage stability and life-span stability of the cathode or the secondary battery may be relatively lowered, and side reactions with an electrolyte may also be increased. However, according to example embodiments, life-span stability and capacity retention properties may be improved using Mn while maintaining an electrical conductivity by Co.

The content of Ni in the NCM-based lithium oxide (e.g., , a mole fraction of nickel based on the total number of moles of nickel, cobalt and manganese) may be 0.5 or more, 0.6 or more, 0.7 or more, or 0.8 or more. In some embodiments, the content of Ni may be in a range from 0.8 to 0.95, from 0.82 to 0.95, from 0.83 to 0.95, from 0.84 to 0.95, from 0.85 to 0.95, or from 0.88 to 0.95.

In some embodiments, the cathode active material may include a lithium cobalt oxide-based active material, a lithium manganese oxide-based active material, a lithium nickel oxide-based active material, or a lithium iron phosphate (LFP) active material (e.g., $LiFePO_4$).

In some embodiments, the cathode active material may include a Li-rich layered oxide (LLO)/OLO (Over-Lithiated Oxide)-based active material, a Mn-rich active material, a Co-less-based active material, etc., which may have a chemical structure or a crystal structure represented by Chemical Formula 2 below. These may be used alone or in a combination of two or more therefrom.

$$[\text{Chemical Formula 2}] \qquad p[Li_2MnO_3]\cdot(1-p)[Li_qJO_2]$$

In Chemical Formula 2, $0<p<1$, $0.9\leq q\leq1.2$, and J may include at least one element from Mn, Ni, Co, Fe, Cr, V, Cu, Zn, Ti, Al, Mg and B.

For example, the cathode slurry may be prepared by mixing the cathode active material in a solvent. The cathode slurry may be coated on the cathode current collector 105, and then dried and pressed to prepare the cathode active material layer 110. The coating may include, e.g., a gravure coating, a slot die coating, a multi-layered simultaneous die coating, an imprinting, a doctor blade coating, a dip coating, a bar coating, a casting, etc. The cathode active material layer 110 may further include a binder, may optionally further include a conductive material, a thickener, etc.

The solvent may include N-methyl-2-pyrrolidone (NMP), dimethylformamide, dimethylacetamide, N,N-dimethylaminopropylamine, ethylene oxide, tetrahydrofuran, etc.

The binder may include polyvinylidene fluoride (PVDF), vinylidene fluoride-co-hexafluoropropylene copolymer (poly(vinylidene fluoride-co-hexafluoropropylene)), polyacrylonitrile, polymethylmethacrylate, acrylonitrile butadiene rubber (NBR), polybutadiene rubber (BR), styrene-butadiene rubber (SBR), etc. These may be used alone or in a combination of two or more therefrom.

In an embodiment, a PVDF-based binder may be used as the cathode binder. In this case, an amount of the binder for forming the cathode active material layer 110 may be reduced and an amount of the cathode active material may be relatively increased. Accordingly, the power and capacity properties of the secondary battery may be improved.

The conductive material may be used to improve conductivity of the cathode active material layer 110 and/or mobility of lithium ions or electrons. For example, the conductive material may include a carbon-based conductive material such as graphite, carbon black, acetylene black, Ketjen black, graphene, a carbon nanotube, a vapor-grown carbon fiber (VGCF), a carbon fiber and/or a metal-based conductive material such as tin, tin oxide, titanium oxide, a perovskite material including $LaStCoO_3$ and $LaSrMnO_3$, etc. These may be used alone or in a combination of two or more therefrom.

The cathode slurry may further include a thickener and/or a dispersive agent. In an embodiment, the cathode slurry may include the thickener such as carboxymethyl cellulose (CMC).

The anode 130 may include an anode current collector 125, and an anode active material layer 120 formed on at least one surface of the anode current collector 125.

For example, the anode current collector 125 may include a copper foil, a nickel foil, a stainless steel foil, a titanium foil, a nickel foam, a copper foam, a polymer substrate coated with a conductive metal, etc. These may be used alone or in a combination of two or more therefrom. For example, a thickness of the anode current collector 125 may be in a range from 10 $\mu$m to 50 $\mu$m.

The anode active material layer 120 may include the above-described anode active material including the composite particle 50. For example, the anode active material may include a plurality of the composite particles 50.

In some embodiments, the anode active material may include the composite particles and a graphite-based active material. For example, the graphite-based active material may include artificial graphite and/or natural graphite.

A content of the composite particles 50 based on a total weight of the anode active material (e.g., a total weight of the plurality of the composite particles 50 and a graphite-based active material) may be 3 wt% or more, 5 wt% or more, 10 wt% or more, 15 wt% or more, 20 wt% or more, 25 wt% or more, 30 wt% or more, 35 wt% or more, 40 wt% or more, or 45 wt% or more.

The content of the composite particles based on the total weight of the anode active material may be 90 wt% or less, 85 wt% or less, 80 wt% or less, 75 wt% or less, 70 wt% or less, 65 wt% or less, 60 wt% or less, 55 wt% or less, or 50 wt% or less.

In an embodiment, the anode active material may substantially consist of the composite particles 50 and the graphite-based active material.

The anode active material may be mixed with a solvent to prepare an anode slurry. The anode slurry may be coated or deposited on the anode current collector 125, and then dried and pressed to form the anode active material layer 120. The coating may include a gravure coating, a slot die coating, a multi-layered simultaneous die coating, an imprinting, a doctor blade coating, a dip coating, a bar coating, a casting, etc. The anode active material layer 120 may further include a binder, and may optionally further include a conductive material, a thickener, etc.

The solvent included in the anode slurry may include water, pure water, deionized water, distilled water, ethanol, isopropanol, methanol, acetone, n-propanol, t-butanol, etc. These may be used alone or in a combination of two or more therefrom.

The above-described materials used in the fabrication of the cathode 100 may also be used as the binder, the conductive material and thickener.

In some embodiments, a styrene-butadiene rubber (SBR)-based binder, carboxymethyl cellulose (CMC), a polyacrylic acid-based binder, a poly(3,4-ethylenedioxythiophene (PEDOT)-based binder, etc., may be used as the anode binder. These may be used alone or in a combination of two or more therefrom.

In example embodiments, a separator 140 may be interposed between the cathode 100 and the anode 130. The separator 140 may be included to prevent an electrical short-circuiting between the cathode 100 and the anode 130 while allowing an ion flow. For example, a thickness of the separator may be in a range from 10 $\mu$m to 20 $\mu$m.

For example, the separator 140 may include a porous polymer film or a porous non-woven fabric.

The porous polymer film may include a polyolefin-based polymer such as an ethylene polymer, a propylene polymer, an ethylene/butene copolymer, an ethylene/hexene copolymer, an ethylene/methacrylate copolymer, etc. These may be used alone or in a combination of two or more therefrom.

The porous non-woven fabric may include a high melting point glass fiber, a polyethylene terephthalate fiber, etc.

The separator 140 may include a ceramic-based material. For example, inorganic particles may be coated on the polymer film or dispersed in the polymer film to improve a heat resistance.

The separator 140 may have a single-layered or a multi-layered structure including the polymer film and/or the non-woven fabric as described above.

In example embodiments, an electrode cell may be defined by the cathode 100, the anode 130 and the separator 140, and a plurality of the electrode cells may be stacked to form an electrode assembly 150 having, e.g., a jelly roll shape. For example, the electrode assembly 150 may be formed by winding, stacking, z-folding, stack-folding, etc., of the separator 140.

The electrode assembly 150 may be accommodated together with an electrolyte solution in a case 160 to define the lithium secondary battery. In example embodiments, a non-aqueous electrolyte solution may be used as the electrolyte solution.

The non-aqueous electrolyte solution may include a lithium salt serving as an electrolyte and an organic solvent. The lithium salt may be represented by, e.g., $Li^+X^-$, and examples of an anion $X^-$ may include $F^-$, $Cl^-$, $Br^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$, $(CF_3CF_2SO_2)_2N^-$, etc.

Examples of the organic solvent include propylene carbonate (PC), ethylene carbonate (EC), butylene carbonate, diethyl carbonate (DEC), dimethyl carbonate (DMC), ethylmethyl carbonate (EMC), methylpropyl carbonate, ethylpropyl carbonate, dipropyl carbonate, vinylene carbonate, methyl acetate (MA), ethyl acetate (EA), n-propylacetate (n-PA), 1,1-dimethylethyl acetate (DMEA), methyl propionate (MP), ethylpropionate (EP), fluoroethyl acetate (FEA), difluoroethyl acetate (DFEA), trifluoroethyl acetate (TFEA), dibutyl ether, tetraethylene glycol dimethyl ether (TEGDME), diethylene glycol dimethyl ether (DEGDME), tetrahydrofuran (THF), 2-methyltetrahydrofuran, ethyl alcohol, isopropyl alcohol, dimethyl sulfoxide, acetonitrile, dimethoxyethane, diethoxyethane, sulfolane, gamma-butyrolactone, propylene sulfite, etc. These may be used alone or in a combination of two or more therefrom.

The non-aqueous electrolyte solution may further include an additive. The additive may include, e.g., a cyclic carbonate-based compound, a fluorine-substituted carbonate-based compound, a sultone-based compound, a cyclic sulfate-based compound, a cyclic sulfite-based compound, a phosphate-based compound, a borate-based compound, etc. These may be used alone or in a combination of two or more therefrom.

The cyclic carbonate-based compound may include vinylene carbonate (VC), vinyl ethylene carbonate (VEC), etc.

The fluorine-substituted carbonate-based compound may include fluoroethylene carbonate (FEC).

The sultone-based compound may include 1,3-propane sultone, 1,3-propene sultone, 1,4-butane sultone, etc.

The cyclic sulfate-based compound may include 1,2-ethylene sulfate, 1,2-propylene sulfate, etc.

The cyclic sulfite-based compound may include ethylene sulfite, butylene sulfite, etc.

The phosphate-based compound may include lithium difluoro bis-oxalato phosphate, lithium difluoro phosphate, etc.

The borate-based compound may include lithium bis(oxalate) borate.

In some embodiments, a solid electrolyte may be used instead of the non-aqueous electrolyte solution. In this case, the lithium secondary battery may be manufactured in the form of an all-solid-state battery. Additionally, a solid electrolyte layer may be disposed between the cathode 100 and the anode 130 instead of the separator 140.

The solid electrolyte may include a sulfide-based electrolyte. Non-limiting examples of the sulfide-based electrolyte include $Li_2S-P_2S_5$, $Li_2S-P_2S_5-LiCl$, $Li_2S-P_2S_5-LiBr$, $Li_2S-P_2S_5-LiCl-LiBr$, $Li_2S-P_2S_5-Li2O$, $Li_2S-P_2S_5-Li_2O-LiI$, $Li_2S-SiS_2$, $Li_2S-SiS_2-LiI$, $Li_2S-SiS_2-LiBr$, $Li_2S-SiS_2-LiCl$, $Li_2S-SiS_2-B_2S_3-LiI$, $Li_2S-SiS_2-P_2S_5-LiI$, $Li_2S-B_2S_3$, $Li_2S-P_2S_5-Z_mS_n$ (m and n are positive numbers, and Z represents Ge, Zn or Ga), $Li_2S-GeS_2$, $Li_2S-SiS_2-Li_3PO_4$, $Li_2S-SiS_2-Li_pMO_q$, (p and q positive numbers, and M represents P, Si, Ge, B, Al, Ga or In), $Li_{7-x}PS_6-xCl_x$ ($0 \leq x \leq 2$), $Li_{7-x}PS_6-xBr_x$ ($0 \leq x \leq 2$), $Li_{7-x}PS_6-xI_x$ ($0 \leq x \leq 2$), etc. These may be used alone or in a combination of two or more therefrom.

In an embodiment, the solid electrolyte may include an oxide-based amorphous solid electrolyte such as $Li_2O-B_2O_3-P_2O_5$, $Li_2O-SiO_2$, $Li_2O-B_2O_3$, $Li_2O-B_2O_3-ZnO$, etc.

As illustrated in FIGS. 2 and 3, electrode tabs (a cathode tab and an anode tab) may protrude from the cathode current collector 105 and the anode electrode current collector 125 included in each electrode cell to one side of the case 160. The electrode tabs may be welded together with the one side of the case 160 to form an electrode lead (a cathode lead 107 and an anode lead 127) extending or exposed to an outside of the case 160.

The lithium secondary battery may be manufactured in, e.g., a cylindrical shape using a can, a prismatic shape, a pouch shape or a coin shape.

<u>Example 1</u>

Preparation of carbon-based particle

Pitch and potassium acetate were dry-mixed in a weight ratio of 5:5, and a first firing was performed at 800 °C for 2 hours. The first fired mixture was washed with an excess of 0.5 M HCl aqueous solution to prepare carbon particles including pores. The carbon particles were prepared so that a specific volume of the pores of the carbon particles was 0.6 cm$^3$/g.

Formation of silicon-containing coating

A silicon-containing gas including a silane gas and an argon gas was injected into a CVD coater at a flow rate of 50 mL/min to 100 mL/min. A content of the silane gas based on a total volume of the silicon-containing gas was 50 vol%. A temperature was increased to 550°C at a ramping rate of 5°C/min to 20°C/min, and then maintained for about 120 minutes to prepare composite particles including a silicon-containing coating.
The composite particles were prepared so that a silicon content based on a total weight of the composite particles was 45 wt% by weight.

Formation of anode

95.5 wt% of an anode electrode active material mixed (a mixture of 15 wt% of the composite particles and 80.5 wt% of artificial graphite), 1 wt% of CNT as a conductive material, 2 wt% of styrene-butadiene rubber (SBR) as a binder and 1.5 wt% of carboxymethyl cellulose (CMC) as a thickener were mixed to obtain an anode slurry.
The anode slurry was coated on a copper substrate, dried and pressed to obtain an anode.

Fabrication of a lithium half-cell

A lithium half-cell including the anode and using a lithium metal as a counter electrode (cathode) was manufactured.
Specifically, a lithium coin half-cell of a CR2016 (diameter: 20 mm, thickness: 1.6 mm) standard was formed by interposing a separator (polyethylene, thickness: 20 μm) between the anode and the lithium metal (thickness: 1 mm).
The assembly of the lithium metal/separator/anode was placed in a coin cell plate, and a cap was covered and clamped after injecting an electrolyte solution. In the preparation of the electrolyte solution, a 1 M LiPF$_6$ solution was formed using a mixed solvent of EC/EMC (3:7; volume ratio), and 2.0 vol% of fluoroethylene carbonate (FEC) was added based on a total volume of the electrolyte solution. After the clamping, impregnation was performed for 3 to 24 hours, and then 3 cycles of charge and discharge were performed at 0.1C (charge conditions: CC-CV 0.1C 0.01V 0.01C CUT-OFF, discharge conditions: CC 0.1C 1.5V CUT-OFF).

Example 2

An anode and a lithium half-cell were manufactured by the same method as that in Example 1, except that an equal amount of a silica dispersion having an average particle size of 5 nm was added instead of potassium acetate, and that the washing was performed with a 0.5 M NaOH aqueous solution instead of the HCl aqueous solution.

Examples 3, 4, 7 to 9, and Comparative Examples 4 and 5

An anode and a lithium half-cell were manufactured by the same method as that in Example 1, except that the content of silane gas based on the total volume of silicon-containing gas was changed as shown in Table 2 below.

Example 5

An anode and a lithium half-cell were manufactured by the same method as that in Example 1, except that an equal amount of a silica dispersion having an average particle size of 5 nm was added instead of potassium acetate, and that the washing was performed with a 0.5 M NaOH aqueous solution instead of the HCl aqueous solution, and the content of silane gas based on the total volume of silicon-containing gas was changed as shown in Table 2 below.

Example 6

An anode and a lithium half-cell were manufactured by the same method as that in Example 1, except that an equal amount of a silica dispersion having an average particle size of 6 nm was added instead of potassium acetate, and the washing was performed with a 0.5 M NaOH aqueous solution instead of the HCl aqueous solution,

Example 10

The carbon-based particles having the silicon-containing coating formed thereon were introduced into a thermal CVD chamber, and then a mixed gas of ethylene gas and argon was supplied and heat-treated at a temperature less than 600°C to produce composite particles having a carbon coating formed on the silicon-containing coating.
Except for the above details, an anode and a lithium half-cell were manufactured by the same method as that in in Example 1.

Comparative Example 1

An anode and a lithium half-cell were manufactured by the same method as that in Example 1, except that an equal amount of a silica dispersion having an average particle size of 10 nm was added instead of potassium acetate, and the washing was performed with a 0.5 M NaOH aqueous solution instead of the HCl aqueous solution.

Comparative Example 2

An anode and a lithium half-cell were manufactured by the same method as that in Example 1, except that an equal amount of a silica dispersion having an average particle size of 50 nm was added instead of potassium acetate, and the washing was performed with a 0.5 M NaOH aqueous solution instead of the HCl aqueous solution.

Comparative Example 3

An anode and a lithium half-cell were manufactured by the same method as that in Example 1, except that an equal amount of a dispersion of silica having an average particle size of 100 nm was added instead of potassium acetate, and washing was performed with a 0.5 M NaOH aqueous solution instead of an HCl aqueous solution.

Experimental Example

(1) Measurement of pore size of carbon particles

Pore sizes of the carbon-based particles according to Examples and Comparative Examples were measured using a surface area analyzer (ASAP-2420) from Micromeritics. Specifically, the pore size of the carbon-based particles was measured by measuring a maximum peak position in a Barrett-Joyner-Halenda (BJH) pore size distribution curve obtained from a nitrogen gas sorption isotherm of each sample obtained from Examples and Comparative Examples.

(2) Measurement of silicon content (Si content) in composite particle

Samples of the composite particles according to Examples and Comparative Examples were placed in a polypropylene tube (PP tube). Nitric acid and a small amount of hydrofluoric acid were added to the polypropylene tube and left overnight at room temperature to be dissolved therein. After the sample was dissolved, the polypropylene tube was cooled, saturated boric acid water was added to neutralize hydrofluoric acid, and then diluted with ultrapure water. Carbon components were removed using a 0.45 $\mu$m syringe filter.
The sample was placed in an inductively coupled plasma spectroscopy analyzer (ICP-OES Optima 8300, Perkin Elmer Co.) and analyzed to measure a silicon content based on a total weight of the composite particles.

(3) Measurement of amorphousness and crystallite size of silicon before heat treatment

Crystallite sizes of the composite particles according to Examples and Comparative Examples were calculated using an XRD analysis and Formula 1.
It was determined as amorphous when a silicon particle size was excessively small and the XRD analysis was not substantially practicable.

(4) Measurement of amorphousness and crystallite size of silicon after heat treatment

The composite particles according Examples and Comparative Examples were heat-treated at 900 °C for 6 hours, and then naturally cooled to room temperature (25°C). Thereafter, crystallite sizes of the composite particles were calculated using the XRD analysis and Formula 1.

It was determined as amorphous when a silicon particle size was excessively small and the XRD analysis was not substantially practicable.

Specific XRD analysis equipment/conditions are as shown in Table 1 below.

[Table 1]

| XRD (X-Ray Diffractometer) EMPYREAN | |
| --- | --- |
| Maker | PANalytical |
| Anode material | Cu |
| K-Alpha1 wavelength | 1.540598 Å |
| Generator voltage | 45 kV |
| Tube current | 40 mA |
| Scan Range | 10~120° |
| Scan Step Size | 0.0065° |
| Divergence slit | 1/4° |
| Antiscatter slit | 1/2° |

(5) Measurement of I(Si(220))/I(SiC)

An XRD analysis was performed on the composite particles according to Examples and Comparative Examples, and a graph was obtained in which a vertical axis represents a peak intensity and a horizontal axis represents 2θ (diffraction angle).

In the graph, a maximum peak intensity in a 2θ range of 46° to 48° measured through the XRD analysis was designated as I(Si(220)), and a maximum peak intensity in a 2θ range of 34° to 36° measured through the XRD analysis was designated as I(SiC).

I(Si(220)) and I(SiC) were substituted into Formula 2 to measure I(Si(220))/I(SiC).

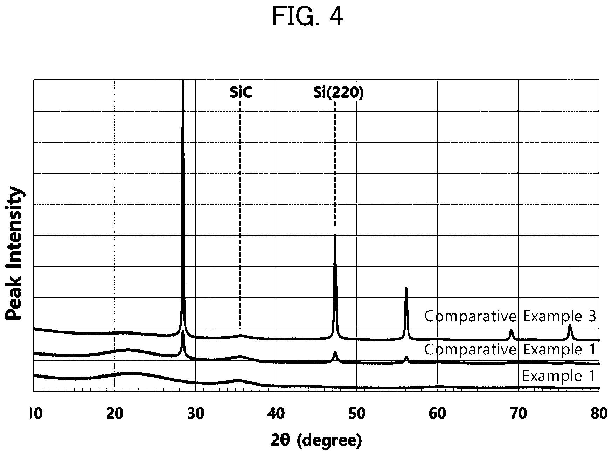

FIG. 4 shows XRD analysis graphs of Example 1, Comparative Example 1 and Comparative Example 3. In FIG. 4, the vertical axis represents the peak intensity and the horizontal axis represents 2θ (diffraction angle), and I(SiC) and I(Si(220)) were measured.

(6) Measurement of capacity retention

The lithium half-cells according to Examples and Comparative Examples were charged (CC/CV 0.5C 0.01V 0.01C CUT-OFF) and discharged (CC 0.1C 3.0V CUT-OFF) by 50 cycles, and a capacity retention was evaluated as a percentage of a discharge capacity at the 50th cycle relative to a discharge capacity at the 1st cycle.

The results of the measurement and evaluation are shown in Table 1 below.

[Table 2]

| | pore Size (nm) | silane gas content (vol%) | Si content (wt%) | Si crystallite size before heat treatment (nm) | Si crystallite size after heat treatment (nm) | I(Si(220)) /I(SiC) | capacity retention (%, 50 cyc) |
| --- | --- | --- | --- | --- | --- | --- | --- |
| Example 1 | 1 | 50 | 44.4 | amorphous | amorphous | 0.21 | 95 |
| Example 2 | 5 | 50 | 45.0 | amorphous | 8 | 0.53 | 94 |
| Example 3 | 1 | 70 | 45.2 | amorphous | 9 | 0.64 | 92 |
| Example 4 | 1 | 20 | 44.2 | amorphous | 7 | 0.52 | 95 |
| Example 5 | 10 | 30 | 446 | amorphous | 9.5 | 0.72 | 91 |
| Example 6 | 11 | 50 | 45.0 | amorphous | 10 | 0.95 | 89 |
| Example 7 | 1 | 10 | 44.0 | amorphous | 9 | 1.01 | 89 |

(continued)

| | pore Size (nm) | silane gas content (vol%) | Si content (wt%) | Si crystallite size before heat treatment (nm) | Si crystallite size after heat treatment (nm) | I(Si(220)) /I(SiC) | capacity retention (%, 50 cyc) |
|---|---|---|---|---|---|---|---|
| Example 8 | 1 | 5 | 439 | amorphous | 6 | 0.55 | 89 |
| Example 9 | 1 | 75 | 45.3 | amorphous | 9.5 | 0.87 | 90 |
| Example 10 | 1 | 50 | 44.5 | amorphous | amorphous | 0.19 | 96 |
| Comparative Example 1 | 9 | 50 | 44.8 | amorphous | 25 | 1.45 | 82 |
| Comparative Example 2 | 20 | 50 | 446 | amorphous | 30 | 1.75 | 75 |
| Comparative Example 3 | 100 | 50 | 44. 5 | amorphous | 90 | 8.51 | 60 |
| Comparative Example 4 | 1 | 80 | 45.2 | amorphous | 15 | 1.23 | 84 |
| Comparative Example 5 | 1 | 100 | 451 | amorphous | 20 | 1.38 | 81 |

Referring to Table 2, in Examples where the crystallite size of silicon included in the silicon-containing coating after the heat treatment was 10 nm or less (including amorphous structure), the capacity retentions were generally improved compared to those from Comparative Examples.

In Examples and Comparative Examples, silicon before the heat treatment had an amorphous structure. However, in Examples, a silicon internal domain size was smaller than that of Comparative Examples, and agglomeration or crystallization of silicon due to the heat treatment was reduced.

In Examples and Comparative Examples, the silicon contents based on the total weight of the composite particles were substantially similar, but physical and life-span properties of the composite particles were different depending on the pore size and the silane gas concentration.

In Example 6 where the pore size of the carbon-based particles exceeded 10 nm, the capacity retention was lowered compared those from other Examples.

In Example 7 where I(Si(220))/I(SiC) was 1.0 or higher, the capacity retention was lowered compared those from other Examples.

In Examples 8 and 9 where the content of silane gas was not within a range of 10 vol% to 70 vol% based on the total volume of silicon-containing gas, the capacity retention was lowered compared those from other Examples.

In Example 10 where the carbon coating was further formed on the silicon-containing coating, the capacity retention was improved compared to those from other Examples.

## Claims

1. An anode active material for a lithium secondary battery comprising a composite particle, the composite particle comprising:

   a carbon-based particle including pores; and
   a silicon-containing coating formed on a surface of the carbon-based particle,
   wherein a crystallite size of silicon included in the silicon-containing coating after a heat treatment of the composite particle at a temperature of 900 °C to 1200 °C for 6 hours to 9 hours measured by an X-ray diffraction (XRD) analysis is 10 nm or less.

2. The anode active material for a lithium secondary battery according to claim 1, wherein the crystallite size of silicon included in the silicon-containing coating is calculated by Formula 1:

[Formula 1]

$$L = \frac{0.9\lambda}{\beta cos\theta}$$

wherein, in Formula 1, L represents the crystallite size (nm), λ represents an X-ray wavelength (nm), β represents a full width at half maximum (FWHM) (rad) of a peak of a (111) plane included in the silicon-containing coating, and θ represents a diffraction angle (rad).

3. The anode active material for a lithium secondary battery according to any one of claims 1 and 2, wherein the heat treatment is performed using 1 g to 5 g of the composite particle in an inactive atmosphere.

4. The anode active material for a lithium secondary battery according to any one of claims 1 to 3, wherein the crystallite size of silicon included in the silicon-containing coating measured by the XRD analysis after the heat treatment is 8 nm or less.

5. The anode active material for a lithium secondary battery according to any one of claims 1 to 4, wherein silicon included in the silicon-containing coating after the heat treatment comprises an amorphous structure.

6. The anode active material for a lithium secondary battery according to any one of claims 1 to 5, wherein a pore size of the carbon-based particle is in a range from 0.1 nm to 10 nm.

7. The anode active material for a lithium secondary battery according to any one of claims 1 to 5, wherein a pore size of the carbon-based particle is in a range from 1 nm to 5 nm.

8. The anode active material for a lithium secondary battery according to any one of claims 1 to 7, wherein the composite particle after the heat treatment further comprises silicon carbide (SiC).

9. The anode active material for a lithium secondary battery according to any one of claims 1 to 8, wherein the composite particle after the heat treatment satisfies Formula 2:

[Formula 2]

$$I(Si(220))/I(SiC) < 1.0$$

wherein, in Formula 2, I(Si(220)) is a maximum peak intensity in a 2θ range of 46° to 48° measured by the XRD analysis, I(SiC) is a maximum peak intensity in a 2θ range of 34° to 36° measured by the XRD analysis, and 2θ is a diffraction angle (°).

10. The anode active material for a lithium secondary battery according to any one of claims 1 to 9, wherein the composite particle further comprises a carbon coating formed on the silicon-containing coating.

11. The anode active material for a lithium secondary battery according to any one of claims 1 to 10, wherein the pores of the carbon-based particle has a shape indented from an outermost portion of the carbon-based particle into an inside of the carbon-based particle.

12. A lithium secondary battery, comprising:

an anode comprising the anode active material for a lithium secondary battery according to any one of claims 1 to 11; and
a cathode facing the anode.

13. A method of preparing an anode active material for a lithium secondary battery, comprising:

preparing a carbon-based particle including pores; and
co-firing the carbon-based particle and a silicon-containing gas to form a composite particle including a silicon-containing coating formed on a surface of the carbon-based particle,
wherein a crystallite size of silicon included in the silicon-containing coating after a heat treatment of the composite particle at a temperature of 900 °C to 1200 °C for 6 hours to 9 hours measured by an X-ray diffraction (XRD) analysis is 10 nm or less.

14. The method according to claim 13, wherein the silicon-containing gas comprises a silane gas, and a volume of the silane gas based on a total volume of the silicon-containing gas is in a range from 10 vol% to 70 vol%.

15. The method of claim 14, wherein the volume of the silane gas based on the total volume of the silicon-containing gas is in a range from 20 vol% to 50 vol%.

FIG. 1

## FIG. 2

## FIG. 3

FIG. 4